# EUROPEAN PATENT SPECIFICATION

(11) **EP 2 653 202 B1**
(45) Date of publication and mention of the grant of the patent: **21.02.2018**
(21) Application number: 11848749.5
(22) Date of filing: 14.12.2011
(51) Int. Cl.: B01D 1/16, B01D 1/14

(54) **SEPARATION METHOD FOR MIXED LIQUIDS**
VERFAHREN ZUM TRENNEN VON FLÜSSIGKEITSGEMISCHEN
PROCÉDÉ DE SÉPARATION POUR LIQUIDES MÉLANGÉS

(30) Priority: 15.12.2010 JP 2010279236
(43) Date of publication of application: 23.10.2013
(73) Proprietor: Bridgestone Corporation, Tokyo 104-8340 (JP)
(72) Inventor: OTSUKI, Masashi, Tokyo 104-8340 (JP); OKUMURA, Satoru, Tokyo 104-8340 (JP); MASA, Takahiro, Tokyo 104-8340 (JP)
(74) Representative: Lamb, Martin John Carstairs
(86) International application number: PCT/JP2011/078947
(87) International publication number: WO 2012/081634

(56) References cited:
- DE-A1-102009 007 193
- FR-A- 1 443 423
- GB-A- 1 125 234
- JP-A- 2005 131 543
- JP-A- 2009 297 638
- JP-A- 2009 297 638
- JP-A- 2010 162 516
- US-A1- 2010 236 724
- MEINDERSMA G. WYTZE ET AL.: 'Separation of Aromatic and Aliphatic Hydrocarbons with Ionic Liquids' CHEM ENG COMMUN vol. 193, no. 10/12, September 2006, pages 1384 - 1396, XP008170527

## Description

### Technical Field

The present invention relates to a separation method for a mixed liquid used for separating a mixed liquid.

### Background Art

Methods using distillation or a permeation membrane have thus far been main-stream of liquid-liquid separation methods for recovering one liquid from a mixed liquid. However, in the case of, for example, distillation, the heating surface and the evaporation surface are different, and energy is lost due to, for example, convection in the heated liquid. Therefore, the efficiency of conversion from heating energy to vaporization energy achieved thereby is not considered to be excellent. In general, in order to separate a target substance by distillation, the concentration of the target substance in a mixed liquid is preferably on the order of 10%. Further, extraction of a target substance using a permeation membrane has difficulty in terms of obtaining a highly concentrated solution, and would require further processes. Therefore, these liquid-liquid separation methods have problems in that they have low efficiency per unit energy, require a long time, and have poor sharpness of separation. There is also a problem in that large facilities are required in many cases.

Patent Document 1: Chinese Patent Application Laid-Open No. 101224933

### DISCLOSURE OF INVENTION

### Technical Problem

In addition to the problems described above, in a case in which, for example, a very small amount of one liquid is contained in another liquid, the separation itself is often difficult to achieve by distillation or the like. A method has been proposed (see Patent Document 1 (Chinese Patent Application Laid-Open No. 101224933) in which, in the situation described above, concentrating, drying, and the like are carried out using a nanofiltration member or the like, thereby recovering a concentrated liquid of an ionic liquid having a concentration of from about 95% to about 99%.

However, even when such a recovery method is used, the compositional mass concentration of the initial ionic liquid (the first fraction recovered) is not sufficiently high and is on the order of 30%. There is a request for a separation method capable of more efficiently recovering a desired liquid from a mixed liquid.

Document GB 1 125 234 discloses a separation method for a mixed liquid involving a vaporization process with a heated gas.

The present invention was made in order to solve the problem described above, and aims to provide a method for separating a mixed liquid which has excellent sharpness of separation and which is capable of separating a mixed liquid with low energy consumption and high efficiency.

### Solution to Problem

A method for separating a mixed liquid according to the invention is a method for separating a mixed liquid, in which one liquid is separated from a mixed liquid containing at least a first liquid and a second liquid, wherein the second liquid is an ionic liquid, being an organic compound that is a chemical substance constituted by a salt and that is in the liquid state at 1 atmosphere and 25 °C, characterized in that the second liquid has a decomposition point that is higher than a boiling point of the first liquid, the method comprising: a spraying process of spraying the mixed liquid from a spraying means for spraying the mixed liquid, into a container into which a heated gas, having a temperature higher than the boiling point of the first liquid, is supplied from a heated gas supply means, the container having a discharge port for discharging at least a gas, wherein the particle diameter of the liquid droplets of the mixed liquid in the spraying process is from 20 to 700 µm; a vaporization process of vaporizing at least the first liquid by allowing the mixed liquid sprayed into the container to contact the heated gas; a discharging process of discharging, through the discharge port of the container, at least a mixed gas that contains the first liquid vaporized in the vaporization process; and a separation process of separating the second liquid from the mixed gas, wherein the temperature of the heated gas in the heated gas supply means is higher than the boiling point of the first liquid but lower than the decomposition point of the second liquid.

The method for separating a mixed liquid according to the invention is capable of providing droplets of the mixed liquid of about 20 µm by spraying the mixed liquid using a spraying means. With a particle diameter of the liquid droplets of about 20 µm, 1L of the liquid has a surface area of about 3,000 cm². Therefore, according to the invention, at least the first liquid can be vaporized using low energy and a short time by allowing liquid droplets of the mixed liquid generated in the spraying process to contact, in a container, a heated gas having a temperature higher than the boiling point of the first liquid. As a result, the separation of the first liquid and the second liquid from each other can easily be carried out in the separation process. When the method for separating a mixed liquid according to the invention is used, the mixed liquid is shaped into liquid droplets in the spraying process, and, therefore, the separation efficiency is not affected by the content of the liquid, and the second liquid can be recovered with high efficiency even in a case in which, for example, a very small amount of the second liquid is contained in the first liquid.

. When the method for separating a mixed liquid according to the invention is used, the first liquid and the second liquid can efficiently be separated from each other via vaporization of the first liquid using low energy and a short time, by allowing the mixed liquid that has been shaped into liquid droplets in the spraying process to contact the heated gas having a temperature higher than the boiling point of the first liquid but lower than the decomposition point of the second liquid.

The temperature of the mixed gas at the discharge port of the container (hereinafter sometimes referred to as "outlet temperature") may be adjusted so as to maintain the first liquid in the vaporized state. Adjustment of the outlet temperature in this manner enables the first liquid to be maintained in the vaporized state at the time the mixed gas is discharged from the container. The outlet temperature may be set, as appropriate, in accordance with the boiling points of the first and second liquids and the gas flow rate in the neighborhood of the discharge port. The outlet temperature may be set such that the outlet temperature is, for example, higher than the boiling point of the first liquid but lower than the boiling point of the second liquid.

The method for separating a mixed liquid according to the invention may include, as the separation process, a liquid-gas separation process of separating a liquid from the mixed gas by allowing the mixed gas discharged from the inside of the container to contact a cooling means.

In a case in which, for example, the second liquid still in the liquid state and a mixed gas containing the first liquid in the vaporized state are simultaneously discharged from the container, the provision of the liquid-gas separation process for separating the liquid from the mixed gas enables the mixed gas and the second liquid to be separated from each other.

In the method for separating a mixed liquid according to the invention, a configuration may be adopted in which the first liquid is either an inorganic solvent or an organic solvent. Due to the use of a first solvent having a boiling point lower than the decomposition point of the second solvent, for example, a mixed liquid of a first solvent and a second solvent can be separated into the first solvent and the second solvent.

In the method for separating a mixed liquid according to the invention, a configuration may be adopted in which the second liquid is an organic solvent, and in which the first liquid is water. When this configuration is adopted, a mixed liquid of an organic solvent and water can be separated into water and the organic solvent.

In the method for separating a mixed liquid according to the invention, a configuration may be adopted in which the ionic liquid is an organic solvent. When this configuration is adopted, for example, a mixed liquid of an ionic liquid and water can be separated into the ionic liquid and water.

### Advantageous Effect of Invention

As described above, a method for separating a mixed liquid which has excellent sharpness of separation and which is capable of separating a mixed liquid with low energy consumption and high efficiency can be provided according to the invention.

### BRIEF DESCRIPTION OF DRAWINGS

Fig. 1 is a flowchart for explaining a flow in a method for separating a mixed liquid according to the invention.
Fig. 2 is an explanatory diagram for explaining an apparatus for realizing a method for separating a mixed liquid according to the invention.

### BEST MODE FOR CARRYING OUT THE INVENTION

The method for separating a mixed liquid according to the invention is a method for separating a mixed liquid, in which one liquid is separated from a mixed liquid containing at least a first liquid and a second liquid, wherein the second liquid is an ionic liquid, being an organic compound that is a chemical substance constituted by a salt and that is in the liquid state at 1 atmosphere and 25 °C, characterized in that the second liquid has a decomposition point that is higher than a boiling point of the first liquid, the method comprising: a spraying process of spraying the mixed liquid from a spraying means for spraying the mixed liquid, into a container into which a heated gas, having a temperature higher than the boiling point of the first liquid, is supplied from a heated gas supply means, the container having a discharge port for discharging at least a gas, wherein the particle diameter of the liquid droplets of the mixed liquid in the spraying process is from 20 to 700 µm; a vaporization process of vaporizing at least the first liquid by allowing the mixed liquid sprayed into the container to contact the heated gas; a discharging process of discharging, through the discharge port of the container, at least a mixed gas that contains the first liquid vaporized in the vaporization process; and a separation process of separating the second liquid from the mixed gas.

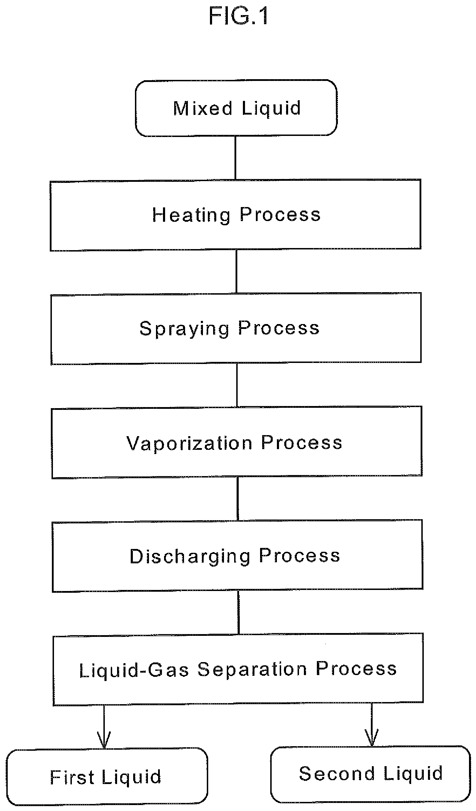

A flow of the method for separating a mixed liquid according to the invention will be described using Fig. 1. Fig. 1 is a flowchart for explaining a flow in the method for separating a mixed liquid according to the invention.

The method for separating a mixed liquid according to the invention includes at least a spraying process, a vaporization process, a discharging process, and a separation process (a liquid-gas separation process in Fig. 1), as illustrated in Fig. 1.

The spraying process is a process in which a mixed liquid containing at least a first liquid and a second liquid having a decomposition higher than the boiling point of the first liquid is sprayed from a spraying means into a container. The inside of the container into which the mixed liquid is to be sprayed is filled with a heated gas that is supplied from a heated gas supply means. The container has a discharge port through which a mixed gas containing the vaporized first liquid is discharged.

A liquid having a boiling point lower than the decomposition point of the second liquid is selected as the first liquid. According to the method for separating a mixed liquid according to the invention, the first liquid and the second liquid can efficiently be separated from each other by separating the first liquid from the mixed liquid in a state in which only the first liquid is vaporized from the mixed liquid. The term "liquid" as used herein means a compound that is in a liquid state, has a certain volume, and has flowability at 1 atm. and 25 °C, and more specifically means a compound confirmed according to the procedures described in the method stipulated in Appendix 2 in the Ministerial Order on Test and Properties of Hazardous Materials (promulgated in February 1989) and the Cabinet Order for Partial Revision of Cabinet Order on Regulation of Hazardous Materials under the Fire Service Act etc. (the sections related to the test and properties of hazardous materials), which are mentioned in Circular Notice *Shobo-ki* No. 11 of the Fire and Disaster Management Agency. The term "boiling point" means a boiling point at 1 atm., and more specifically means a boiling point as measured by the method stipulated in JIS K2233: 1984. Here, in the case of liquids not having a boiling point (including ionic liquids), the decomposition point is used as the boiling point for the purpose of convenience, and used as a basis for setting the heating temperature and the like. In other words, the scope of the "boiling point" in the invention also includes the "decomposition point" of a liquid in a case in which the liquid does not have a boiling point. Here, the term "decomposition point" refers to a temperature at which the weight of the liquid has decreased by 10% due to changes in the molecular structure of the liquid when a measurement is carried out using a thermogravimetric analyzer (TGA) at a temperature elevation rate of 10 °C/min. Further, "gas" is one state of matter and refers to a state in which the matter has properties such that the matter expands by itself, and in which the matter, therefore, has properties such that the matter tends to expand throughout a container without possessing a fixed shape or volume.

The combination of the first liquid and the second liquid is not particularly limited. For example, a solvent may be used as at least one of the first liquid or the second liquid, or both the first liquid and the second liquid may be solvents. The solvent may be either an inorganic solvent or an organic solvent. Therefore, examples of the combination of the first liquid and the second liquid include a combination of two organic solvents, a combination of two inorganic solvents, and a combination of an organic solvent and an inorganic solvent, and specifically include a combination of an organic solvent and water, a combination of an organic solvent and an ionic liquid, a combination of water and an ionic liquid, and a combination of two ionic liquids. In these cases, a liquid having a lower boiling point is the first liquid. Here, the term "ionic liquid" means an organic compound that is a chemical substance constituted by a salt and that is in the liquid state at 1 atm. and 25 °C, and the scope of the ionic liquid does not include water (H₂O).

Examples of the organic solvent include N-methylmorpholine oxide (NMMO), dimethylacetamide (DMAc), ethanol, isopropyl alcohol, 1-ethyl-3-methylimidazolium acetate (C2mimAc), 1-ethyl-3-methylimidazolium diethylphosphate (C2mimDEP), 1-allyl-3-methylimidazolium chloride (AmimCl), 1-ethylpyridium chloride, dimethylsulfoxide (DMSO), pyridine, tetrahydrofuran (THF), dioxane, polyethylene glycol (PEG), 1-ethyl-3-methylimidazolium methylsulfonate, and dimethylformamide (DMF).

Among them, 1-ethyl-3-methylimidazolium acetate (C2mimAc), 1-ethyl-3-methylimidazolium diethylphosphate (C2mimDEP), 1-allyl-3-methylimidazolium chloride (AmimCl), 1-ethylpyridium chloride, and 1-ethyl-3-methylimidazolium methylsulfonate are within the scope of the ionic liquid described above.

Examples of inorganic solvent that can be used include water (H₂O) and molten salts.

The specific combination of the first liquid and the second liquid is not particularly limited, and examples thereof include a combination of water (boiling point: about 100 °C) and C2mimAc (boiling point (decomposition point): about 210 °C), a combination of water and C2mimDEP (boiling point (decomposition point): about 255 °C), a combination of water and AmimCl (boiling point (decomposition point): about 245 °C), and a combination of water and NMMO (boiling point: 120 °C).

In the combination described above, the liquid having the higher boiling point (decomposition point) corresponds to the second liquid.

The method for separating a mixed liquid according to the invention is not affected by the content ratio of the first liquid and the second liquid, and is capable of achieving high separation efficiency. For example, the second liquid can be separated and recovered with high efficiency even when the content of the second liquid is 1% by mass or less.

The combination of the first liquid and the second liquid is preferably a combination that does not form an azeotropic mixture when the first and second liquids are mixed. Here, the term "azeotrope" refers to a phenomenon that the liquid phase and the vapor phase have the same composition when a liquid mixture is boiling.

The difference between the boiling point of the first liquid and the decomposition point of the second liquid is not particularly limited. For example, the difference between the boiling point of the first liquid and the decomposition point of the second liquid is preferably from 20 to 200 °C, and more preferably from 100 to 200 °C.

In the spraying process, the mixed liquid is shaped into liquid droplets and sprayed by a spraying means. The particle diameter of the liquid droplets of the mixed liquid is from 20 to 700 µm, and preferably from 400 to 500 µm. In this process, the nozzle diameter, the spraying pressure, and the like of the spraying means can be set, as appropriate, based on the particle diameter of the liquid droplets of the mixed liquid. Further, from the viewpoint of nozzle clogging and an increase in the spraying efficiency, a process of removing impurities and solids from the mixed liquid using filtration or the like may be carried out prior to spraying the mixed liquid from a spraying means.

The container (chamber) used in the method for separating a mixed liquid according to the invention is not particularly limited, and those having a level of strength capable of withstanding the planned processes, made of a material exerting the strength, and having a hollow shape may be used, as appropriate. The volume of the container may be selected, as appropriate, in accordance with the amount of the mixed liquid to be processed. The inner pressure of the container is not particularly limited, either, and the inner pressure of the container is preferably from about 0.05 to about 0.15 MPa, and more preferably from 0.08 to 0.10 MPa. The temperature inside the container is maintained at a temperature that is higher than the boiling point of the first liquid but lower than the decomposition point of the liquid, using the heated gas.

The container is filled with the heated gas supplied from the heated gas supply means. Any heated gas that has a higher temperature than the boiling point of the first liquid at the time of the supplying may be used without particular limitations. It is preferable to use a gas having little reactivity with the mixed liquid. For example, air, a nitrogen gas, an inert gas, or the like may be used. The supply amount and the supply rate of the heated gas to the container are not particularly limited. The flow rate is preferably from more than 0 m³/min to 1.0 m³/min, and more preferably from 0.1 m³/min to 0.7 m³/min, from the viewpoint of providing a flow rate at a level at which the pressure applied to the container can be maintained at a desired level. The number of ports through which the heated gas is supplied is not limited to one, and the heated gas may flow into the container from plural positions; the position or positions at which the heated gas flows into are not particularly limited.

In regard to the temperature of the heated gas, for example, the temperature of the heated gas at the time of being supplied to the container (hereinafter sometimes referred to as "inlet temperature") may be controlled using a heating means (for example, heater) such that both the inlet temperature and the outlet temperature of the gas temperature (the temperature inside the container) are higher than the boiling point of the first liquid but lower than the decomposition point of the second liquid. The inlet temperature of the heated gas may be controlled by, for example, providing a temperature sensor at or around the heated gas supply means of the container, providing a temperature sensor at or around the discharge port of the container, and monitoring each of the temperatures. For example, in the case of separating a mixed liquid that contains water and another liquid, the outlet temperature may be set based on the boiling point of water.

The vaporization process is a process of allowing the mixed liquid sprayed into the container to contact the heated gas, to vaporize at least the first liquid. In practice, since the mixed liquid sprayed in the spraying process contacts the heated gas at the same time as the spraying, the spraying process and the vaporization process are carried out almost simultaneously. In a case in which the mixed liquid has been heated to the required temperature at the time of spraying, the vaporization process is carried out simultaneously with the spraying process. In the vaporization process, the vaporized first liquid, and the second liquid which is in the gas state or still in the liquid state, are mixed with the heated gas in the container, thereby forming a mixed gas. The heated gas supply means may have a configuration in which the heated gas is supplied from the outside of the container or a configuration in which a gas in the container is heated by a heating machine provided inside the container to supply the mixed gas.

The discharging process is a process in which the mixed gas containing the first liquid vaporized in the vaporization process is discharged from a discharge port of the container. In the discharging process, the apparatus may have, for example, a configuration in which the mixed gas in the container can be discharged from a discharge port by blowing (supplying) the heated gas or the like from the inlet side of the container, or a configuration in which the mixed gas can be discharged from a discharge port by suctioning the mixed gas in the container using a blower or the like connected to the discharge port side, or a combination of these configurations. In the discharging process, in a case in which, for example, only the first liquid is vaporized, the apparatus may have a configuration in which the second liquid in liquid droplet form and the mixed gas containing the vaporized first liquid are together discharged to the outside of the container through a discharge port, or a configuration in which the second liquid is recovered from another discharge port, for example from the bottom of a container, by utilizing the difference in mass. In this case, the discharging process and the separation process would be carried out almost simultaneously.

In a case in which the second liquid in the liquid droplet form and the mixed gas are together discharged from a discharge port of the container in the discharging process in the method for separating a mixed liquid according to the invention, the separation process of separating a liquid (the second liquid) from the mixed gas discharged from the inside of the container is carried out. The separation process is a process of separating the second liquid from the mixed gas, and may be, for example, a liquid-gas separation process using a cooling means as illustrated in Fig. 1. In the separation process, the means for separating a liquid from the mixed gas is not particularly limited, and known methods may be used, as appropriate. For example, a liquid can be separated from the mixed gas utilizing, for example, a centrifugal force generated by airflow. Further, a liquid-gas separation process of allowing the mixed gas to contact a cooling means provided in the separator, thereby condensing the second liquid and separating the second liquid from the mixed gas, may be carried out as a separation process of separating the mixed gas discharged in the discharging process into the first liquid and the second liquid. In a case in which there is a possibility that the recovered second liquid contains solids or the like, a process of removing solids or the like from the recovered second liquid by using filtration or the like may be carried out after the separation process.

Although an embodiment in which the separation process is carried out after the discharging process is described, the separation process in the invention is not limited to the embodiment in which the separation process is carried out after the discharging process. The discharging process and the separation process would be carried out in parallel in a case in which only the first liquid is vaporized as described above, and in which the apparatus is configured to separate, in the container, the second liquid in the liquid droplet form from the mixed gas, and to enable recovery of the second liquid from, for example, the bottom of the container.

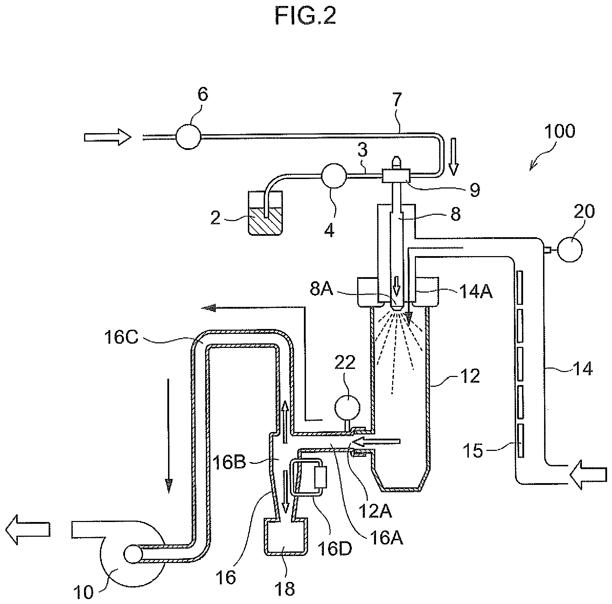

Next, an apparatus used in the method for separating a mixed liquid according to the invention and a flow of the method for separating a mixed liquid according to the invention will be described using Fig, 2. Fig. 2 is an explanatory diagram for explaining an apparatus for practicing the method for separating a mixed liquid according to the invention. In Fig. 2, a separation apparatus 100 is configured to include a spray nozzle (spraying means) 8, a blower 10, a chamber (container) 12, a heated gas supply channel 14, heaters 15, a separator 16, and a recovery container 18.

As illustrated in Fig. 2, the spray nozzle 8 is connected, via a mixer 9, to a supply tube 3 for supplying the mixed liquid from a sample container 2 to the spray nozzle 8, and the supply tube 3 is equipped with a liquid transfer pump 4. The supply tube 3 may be provided with a filter for removing impurities or solids in the mixed liquid. Further, a supply tube 7 for the gas to be sprayed, which is equipped with a needle valve 6, is connected to the spray nozzle 8 via the mixer 9, and compressed air supplied from a compressor or the like can be supplied, together with the mixed liquid supplied from the sample container 2, to the spray nozzle 8. The diameter of the tip portion 8A of the spray nozzle (nozzle diameter) is not particularly limited, and may be selected, as appropriate, in accordance with the desired particle diameter of the liquid droplets. The nozzle diameter is, for example, preferably from 400 to 700 µm, and more preferably from 500 to 700 µm.

The mixed liquid supply side (hereinafter sometimes referred to as "inlet side") of the chamber 12 is provided with the spray nozzle 8 as well as connected to a tip portion 14A of the heated gas supply channel 14. The tip portion 14A of the heated gas supply channel 14 is configured such that the heated gas can flow through a region around the spray nozzle 8 located at the center, and is configured such that the heated gas temperature-controlled by the heaters 15 provided inside the heated gas supply channel 14 is supplied into the chamber 12 via the tip portion 14A. The heaters 15 (heating means) may be any device capable of heating the gas to be heated to a desired temperature, without particular limitations. For example, known heating wires or the like may be used. The heated gas supply channel 14 is equipped with a temperature sensor 20, and the temperature (inlet temperature) of the heated gas in the heated gas supply channel 14 at the time the heated gas is supplied into the chamber 12 can be monitored, the heated gas having been heated by the heaters 15. Further, the heat from the heated gas can be transferred to the mixed liquid that has flown into the spray nozzle 8 via a heat conductor such as a metal or the like forming the nozzle, and the mixed liquid can be heated to the required temperature during a period until the mixed liquid reaches the inlet side, which is the mixed liquid supply side, at the tip of the spray nozzle 8.

The chamber 12 is a container for allowing the mixed gas sprayed into the chamber and the separately supplied heated gas to contact each other. As described above, the spray nozzle 8 and the heated gas supply channel 14 are connected to the inlet side of the chamber 12, such that the mixed liquid can be sprayed into the container and such that the heated gas can also be supplied into the container. Further, a discharge port 12A for discharging the mixed gas to outside the chamber is provided at a side of the chamber 12 at which the gas or the like is discharged (hereinafter sometimes referred to simply as "outlet side"). The present apparatus is designed such that liquid droplets of the second liquid and the mixed gas are together discharged from the chamber.

Further, the chamber 12 can be used also as a recovery container for recovering the second liquid which remains in the liquid state without being incorporated to the mixed gas, and a second discharge port for discharging the second liquid may be provided at any position (for example, at the bottom) of the chamber 12, if necessary.

Further, a temperature sensor 22 is provided at or around the discharge port 12A of the chamber, and the temperature (outlet temperature) of the mixed gas at the time of being discharged from the inside of the chamber 12 can be monitored. Moreover, the separator 16 is connected to the discharge port 12A of the chamber.

Here, a configuration may be adopted in which the temperature monitored by the temperature sensor 22 is fed back to the temperature of the heated gas, and in which the heating temperature at the heaters 15 or the like can be controlled to maintain the inlet temperature and the outlet temperature constant. The temperature of the mixed gas at the discharge port of the container (outlet temperature) may be set to a temperature with which the first liquid can maintain the vaporized state thereof. Setting the outlet temperature in this manner enables the first liquid to maintain the vaporized state thereof at the time the mixed gas is discharged from the container. The outlet temperature may be set, as appropriate, in accordance with the boiling points of the first and second liquids and the flow rate of gas in the neighborhood of the discharge port. The outlet temperature may, for example, be set to be higher than the boiling point of the first liquid but lower than the decomposition point of the second liquid.

The separator 16 is used to separate the mixed gas and the second liquid from each other. The separator 16 is composed of a joint portion 16A, a separation portion 16B for separating the mixed gas, and a discharge tube 16C. The separator 16 is connected to the discharge port 12A of the chamber at the joint portion 16A, so that the mixed gas or the like discharged from the chamber 12 is supplied to the separator 16. The inside of the separation portion 16B in the separator 16 is formed such that an airflow spirally swirls, and is configured such that a cyclone of airflow is generated by suction by the blower 10 and such that the second liquid can be separated from the mixed gas by a centrifugal force. In the separator 16, the recovery container 18 is connected to the lower side, in terms of the direction of gravitational force, of the separation portion 16B, and the recovery container 18 is configured such that the second liquid separated from the mixed gas can be recovered therein. Further, the discharge tube 16C to which the blower 10 is connected is connected to the upper side, in terms of the direction of gravitational force, of the separator 16, and the discharge tube 16C is configured such that the mixed gas separated from the second liquid is discharged by suction by the blower 10. Since the temperature of the mixed gas is decreased by the suction by the blower 10, the liquid can be recovered more efficiently.

In Fig. 2, a cooler 16D is provided in the inside of the separation portion 16B of the liquid separator 16. The cooler 16D has a structure in which a coolant is circulated in a piping, and the separation (recovery) efficiency of the second liquid can be increased by cooling the mixed gas. The installation of the cooler 16D is optional. Other than this, it is possible to provide, in the separator 16, a region having an increased area of contact with the mixed gas as a condensing means for promoting condensation of the second liquid; this configuration enables more efficient recovery of the liquid.

Next, a flow in a method for separating a mixed liquid according to the invention in which the separation apparatus 100 is used will be described using Fig. 2. In the following example, an example in which a mixed liquid containing about 0.4% of 1-ethyl-3-methylidazolium acetate (C2mimAc) (decomposition point: 210 °C, second liquid) in water (boiling point: about 100 °C, first liquid) is used will be described. However, the invention is not limited to this embodiment.

First, the mixed liquid in the sample container 2 is fed to the spray nozzle 8 by the liquid transfer pump 4. At the same time, compressed air is fed to the spray nozzle 8 by a compressor or the like, the pressure of the compressed air being adjusted by the needle valve 6. The mixed liquid and the compressed air fed to the spray nozzle 8 are mixed in the mixer 9 connected to the spray nozzle 8, and sprayed from the tip portion 8A into the chamber 12. Here, the spray conditions are determined, as appropriate, while monitoring the outlet temperature. For example, the spray pressure is from 0.08 MPa to 0.1 MPa, and the liquid feed rate is from about 8 to about 10 g/min.

When the mixed liquid is sprayed, the chamber 12 is already filled with a heated gas maintained at or near the normal pressure. The heaters 15 heat a gas (for example, nitrogen gas) suctioned from the outside due to suction by the blower 10. Here, the temperature of the heated gas is monitored by the temperature sensor 20, and the heated gas is heated to a desired inlet temperature by the heaters 15 provided in the heated gas supply channel 14. The heated gas heated by the heaters 15 is supplied into the chamber 12 via the tip portion 14A of the heat gas supply channel. At this time, the inlet temperature of the heated gas is about 220 °C. Further, the spray nozzle 8 is configured to be heatable by the tip portion 14A of the heated gas supply channel 14, so that the mixed liquid in the spray nozzle 8 can be heated. Due to the heating, the viscosity of the mixed liquid in the spray nozzle can be decreased, as a result of which liquid feeding can be carried out efficiently.

The mixed liquid sprayed into the chamber 12 forms liquid droplets having particle diameters of about 20 µm. As a result of contact between the mixed liquid in the form of liquid droplets and the heated gas supplied into the chamber 12, the first liquid (water) in the mixed liquid is evaporated to vaporize. Here, since the area of contact between the mixed liquid in the liquid droplet form and the heated gas is made significantly large due to spraying of the mixed liquid, the first liquid is vaporized within a very short time.

The first liquid (water) vaporized in the chamber 12 mixes with the heated gas and a gas used for the spraying, resulting in a mixed gas. Here, the mixed gas in the chamber 12 is discharged from the discharge port 12A by suction by the blower 10. Although the second liquid (C2mimAc) in the liquid droplet form has not vaporized, the second liquid in the form of minute liquid droplets mixes with the mixed gas, and is also discharged from the discharge port 12A.

Here, the temperature of the mixed gas at the discharge port 12A (outlet temperature) is monitored by the temperature sensor 22, and the gas temperature (outlet temperature) is controlled to be between the boiling point of the first liquid (water) and the boiling point of the second liquid (C2mimAc). The outlet temperature may be set to be, for example, from 60 °C to 110 °C. In a case in which the first liquid is water, the outlet temperature is preferably equal to or near 100 °C. In order to control the outlet temperature, for example, the degree to which the temperature of the heated gas supplied to the chamber 12 decreased in the chamber as compared to the inlet temperature may be measured, and the inlet temperature of the heated gas may be set to be moderately higher using the heaters 15 and using the measured degree as a basis, so as to control the outlet temperature to be the desired temperature.

The mixed gas discharged from the discharge port 12A of the chamber and the second liquid in the liquid droplet form are supplied to the separator 16 via the joint portion 16A by suction by the blower 10. Since the separation portion 16 in the separator 16 is formed so as to allow airflow to spirally swirl, a cyclone of airflow is generated therein. The second liquid is condensed due to a centrifugal force generated by the cyclone of airflow and the cooling effects exerted by the cooler 16D, as a result of which the second liquid (C2mimAc) can be separated from the mixed gas. The separated second liquid (C2mimAc) is thereafter recovered in the recovery container 18 provided at the lower side, in terms of the direction of gravitational force, of the separator 16. The recovery container 18 may be equipped with a filter that removes solids or the like from the second liquid.

The mixed gas from which the second liquid has been separated is discharged to the outside of the apparatus via the discharge tube 16C, in the state in which the mixed gas still contains the vaporized first liquid (water).

These processes are continuously carried out for the desired amount of the mixed liquid.

According to the example described above, for example, C2mimAc can be recovered from an aqueous solution containing about 0.4% of C2mimA with low energy consumption in a short time, and the recovery efficiency is high as indicated by a compositional mass concentration of the recovered C2mimAc of about 90% or higher.

Although the inlet temperature of the heated gas is set to be a temperature between the boiling point of the first liquid (water) and the decomposition point of the second liquid (C2mimAc) in the example described above, the method for separating a mixed liquid according to the invention is not limited thereto. There is no limitation as long as the outlet temperature is a temperature at which the first liquid can maintain the gas state thereof.

Although a mixed gas containing the first liquid is discharged to the outside of the apparatus in the example described above, a means for recovering the first liquid, such as a recovery container, may separately be provided. In this case, the means for recovering is capable of recovering the first liquid from the mixed gas and discharging the mixed gas after the recovering to the outside of the apparatus by taking a configuration in which, for example, the temperature of the recovery container is set to be a temperature equal to or lower than the boiling point of the first liquid (about 30 °C in the example described above), or in which a cooler is provided and the mixed gas is allowed to contact the cooler. In particular, in a case in which a liquid other than water (for example, an organic solvent) is used as the first liquid, it is preferable to separately provide a recovery process of recovering the first liquid, such as those described above.

Although modes for practicing the invention are described above by reference to embodiments, those embodiments are merely examples, and various modifications may be made when practicing the invention, within a range that does not depart from the gist of the invention. Needless to say, the scope of right of the invention is not limited to those embodiments.

### EXAMPLES

Hereinafter, the invention will specifically be described using examples. However, the invention is not limited to the examples.

In the Examples and Comparative Example 3, the method for separating according to the invention was carried out with respect to the mixed liquids noted in the following Table 1 using a commercially available SPRAY DRYER ADL311-A manufactured by YAMATO SCIENTIFIC Co., Ltd. The respective machine conditions are noted in Table 1. The mixed liquid F used in Comparative Example 3 is a mixed liquid of water and ethanol, which have azeotropic relationship with each other.

In Comparative Example 1, 100 mL of mixed liquid A was added into a 300 mL Erlenmeyer flask, and heated to 105 °C in an oil bath at normal pressure, thereby carrying out distillation.

In Comparative Example 2, mixed liquid A was concentrated by being processed with a reverse osmosis (RO) membrane. In regard to the conditions of concentration using a RO membrane, the mixed liquid in a liquid volume of 230 mL was charged into a concentration apparatus ("SPINFLOW-CELL" manufactured by TRI TEC CORPORATION) equipped with a RO membrane, high-pressure air was connected to the concentration apparatus to apply a pressure of 4 MPa, and water that passed through the RO membrane was discharged to the outside of the apparatus, as a result of which a concentrated liquid was obtained.

In Table 1 below, when the temperatures are noted before and after the symbol "→" in the cells for inlet temperature and outlet temperature, the temperature noted before the symbol "→" indicates the temperature from the starting-up of the apparatus until the apparatus became stable. The temperature noted after the symbol "→" indicates the temperature at which spraying was actually carried out after the apparatus became stable.

**Table 1 - * denotes Examples not according to the invention**

| | | Example 1 | Example 2 | Example 3 | Example 4* | Example 5 | Comparative Example 1 | | Comparative Example 2 | | Comparative Example 3 | |
|---|---|---|---|---|---|---|---|---|---|---|---|---|
| Mixed liquid | | Mixed liquid A | Mixed liquid B | Mixed liquid C | Mixed liquid D | Mixed liquid E | Mixed liquid A | | Mixed liquid A | | Mixed liquid F | |
| Separation conditions | Inlet temperature (°C) | 200→ 220 | 195→ 200 | 200→ 220 | 125→ 130 | 200→ 220 | Distillation temperature | 105 °C | Container temperature | 30 °C | Inlet temperature (°C) | 120 →115 |
| | Outlet temperature (°C) | 92→99 | 96→99 | 92→97 | 44→-50 | 93→99 | | | Outlet temperature | 30 °C | Outlet temperature (°C) | 59→ 46 |
| | Spray pressure (MPa) | 0.08 | 0.08 | 0.08 | 0.08 | 0.08 | Test liquid volume | 100 mL | Applied pressure | 4 MPa | Spray pressure (MPa) | 0.08 |
| | Sprayed volume (g) | 998.08 | 98.59 | 1002.1 | 261.58 | 994.8 | Test time | 350 min | Test liquid volume | 230 mL | Sprayed volume (g) | 98.65 |
| | Liquid feed time (min) | 102 | 10 | 108 | 30.42 | 107 | | | Test time | 165 min | Liquid feed time (min) | 12.4 |
| | Liquid feed rate (g/min) | 9.79 | 9.86 | 9.28 | 8.6 | 9.3 | | | Volume of ejected liquid | 1.4 mL/min | Liquid feed rate (g/min) | 7.96 |
| | Nozzle diameter (liquid) | 0.7ø | 0.7ø | 0.7ø | 0.7ø | 0.7ø | | | Membrane type | Su-800 | Nozzle diameter (liquid) | 0.7ø |
| Results | Volume of second liquid recovered (g) | 1.63 | 37.53 | 1.64 | 6.08 | 1.88 | 0.4 | | 8.74 | | 0 | |
| | Recovery ratio* 1 (%) | 36.7 | 48.9 | 47.5 | 44.2 | 42.5 | 100 | | 95 | | 0 | |
| | Mass concentration in recovered composition *2 (% by mass) | 90 | 90 | 87 | 76 | 90 | 100 | | 23% | | 0 | |
| | Time required for separation per 100 mL (min) | 10.2 | 10.1 | 10.8 | 11.6 | 10.8 | 350 | | 71.7 | | 12.56 | |

| | | | | | | | | | | | | |
|---|---|---|---|---|---|---|---|---|---|---|---|---|
| * 1: Recovery ratio (%) = (Volume of the second liquid recovered × Mass concentration in recovered composition) / Volume of the second liquid sprayed (Sprayed volume in the Table × Concentration of the second liquid in the mixed liquid) *2: The "mass concentration in recovered composition" in the Table is the concentration of the second liquid in the recovered liquid calculated from the volume of the second liquid remaining after heating the recovered liquid at 100 °C for 30 minutes using a SDT Q-600 (manufactured by TA Instruments) Mixed liquid A: Water and an ionic liquid (0.4% by mass of 1-ethyl-3-methylimidazolium acetate (C2mimAc) having a decomposition point of 210 °C) Mixed liquid B: Water and an ionic liquid (70% by mass of 1-ethyl-3-methylimidazolium acetate (C2mimAc) having a decomposition point of 210 °C) Mixed liquid C: Water, an ionic liquid (0.3% by mass of 1-ethyl-3-methylimidazolium acetate (C2mimAc) having a decomposition point of 210 °C), and an organic solvent (0.1% by mass of dimethylacetamide (DMAc) having a boiling point of 165 °C) Mixed liquid D: (not according to the invention) Water and an organic solvent (4% by mass of N-methylmorpholine oxide (NMMO) having a boiling point of 120 °C) Mixed liquid E: Water and an ionic liquid (0.4% by mass of 1-ethyl-3-methylimidazolium diethylphosphate (C2mimDEP) having a decomposition point of 255 °C) Mixed liquid F: Water and ethanol (50% by mass of ethanol (EtOH) having a boiling point of 78.4 °C) * Boiling point of water: 100 °C at 1 atm. | | | | | | | | | | | | |

The first liquid and second liquid and the contents thereof in each of the mixed liquids described above are as follows.

**Table 2**

| | First liquid | Second liquid |
|---|---|---|
| Mixed liquid A | Water (99.6% by mass) | C2mimAc (0.4% by mass) |
| Mixed liquid B | Water (30% by mass) | C2mimAc (70% by mass) |
| Mixed liquid C | Water (99.6% by mass) + DMAc (0.1% by mass) | C2mimAc (0.3% by mass) |
| Mixed liquid D* | Water (96% by mass) | NMMO (4% by mass) |
| Mixed liquid E | Water (99.6% by mass) | C2mimDEP (0.4% by mass) |
| Mixed liquid F | Water (50% by mass) | Ethanol (50% by mass) |

| | | |
|---|---|---|
| * not according to the invention | | |

As demonstrated in Table 1, the mass concentration in the recovered composition obtained in the Examples, in which the method for separating a mixed liquid according to the invention was used, was higher than that obtained in Comparative Example 2, in which a reverse osmosis (RO) membrane was used. Further, the time required for separation per 100 mL of mixed liquid was 350 minutes in Comparative Example 1, whereas the time was 71.7 minutes in Comparative Example 2.

In contrast, the average time required for separation per 100 mL in the case of using the separation method of Examples was shorter than that in Comparative Examples. Therefore, it is understood that the separation method has excellent energy efficiency.

However, recovery of the second liquid (ethanol) was difficult in Comparative Example 3, in which mixed liquid F composed of water and ethanol having an azeotropic relationship with each other was used, even though procedures similar those in Examples were employed.

The disclosure of Japanese Patent Application No. 2010-279236 is incorporated herein by reference.

All publications, patent applications, and technical standards mentioned in this specification are herein incorporated by reference to the same extent as if each individual publication, patent application, or technical standard was specifically and individually indicated to be incorporated by reference.

### Explanation of Reference Characters

- 2: Sample container
- 4: Liquid transfer pump
- 3: Supply tube
- 6: Needle valve
- 7: Supply tube for gas to be sprayed
- 8: Spray nozzle
- 8A: Tip portion of spray nozzle
- 9: Mixer
- 10: Blower
- 12: Chamber
- 12A: Discharge port
- 14: Heated gas supply channel
- 14A: Tip portion of heated gas supply channel
- 15: Heaters
- 16: Separator
- 16A: Joint portion
- 16B: Separation portion

- 16C: Discharge tube
- 16D: Cooler
- 18: Recovery container
- 20: Temperature sensor
- 22: Temperature sensor
- 100: Separation apparatus

## Claims

1. A method for separating a mixed liquid, in which one liquid is separated from a mixed liquid containing at least a first liquid and a second liquid, wherein the second liquid is an ionic liquid, being an organic compound that is a chemical substance constituted by a salt and that is in the liquid state at 1 atmosphere and 25 °C, **characterized in that** the second liquid has a decomposition point that is higher than a boiling point of the first liquid, the method comprising:
a spraying process of spraying the mixed liquid from a spraying means (8) for spraying the mixed liquid, into a container (12) into which a heated gas, having a temperature higher than the boiling point of the first liquid, is supplied from a heated gas supply means (14, 15), the container (12) having a discharge port (12A) for discharging at least a gas, wherein the particle diameter of the liquid droplets of the mixed liquid in the spraying process is from 20 to 700 µm;
a vaporization process of vaporizing at least the first liquid by allowing the mixed liquid sprayed into the container (12) to contact the heated gas;
a discharging process of discharging, through the discharge port (12A) of the container (12), at least a mixed gas that contains the first liquid vaporized in the vaporization process; and
a separation process of separating the second liquid from the mixed gas,
wherein the temperature of the heated gas in the heated gas supply means (14, 15) is higher than the boiling point of the first liquid but lower than the decomposition point of the second liquid.

2. The method for separating a mixed liquid according to claim 1, wherein the separation process includes a liquid-gas separation process of separating the second liquid from the mixed gas by allowing the mixed gas discharged from the container (12) to contact a cooling means.

3. The method for separating a mixed liquid according to claim 1 or 2, wherein the first liquid is either an inorganic solvent or an organic solvent.

4. The method for separating a mixed liquid according to claim 1 or 2, wherein the first liquid is water.

## Patentansprüche

1. Verfahren zum Trennen eines Flüssigkeitsgemischs, bei welchem eine Flüssigkeit von einem Flüssigkeitsgemisch getrennt wird, welches mindestens eine erste Flüssigkeit und eine zweite Flüssigkeit enthält, wobei die zweite Flüssigkeit eine ionische Flüssigkeit ist, welche eine organische Verbindung ist, welche eine chemische Substanz ist, welche aus einem Salz besteht und welche im flüssigen Zustand bei 1 Atmosphäre und 25 °C ist, **dadurch gekennzeichnet, dass** die zweite Flüssigkeit einen Zersetzungspunkt besitzt, welcher höher liegt als ein Siedepunkt der ersten Flüssigkeit, wobei das Verfahren Folgendes beinhaltet:
einen Sprühprozess des Sprühens des Flüssigkeitsgemischs aus einem Sprühmittel (8) zum Sprühen des Flüssigkeitsgemischs, in einen Behälter (12), in welchen ein erhitztes Gas, das eine Temperatur besitzt, die höher als der Siedepunkt der ersten Flüssigkeit ist, aus einem Zufuhrmittel von erhitztem Gas (14, 15) zugeführt wird, wobei der Behälter (12) eine Ablassöffnung (12A) zum Ablassen von mindestens einem Gas besitzt, wobei der Partikeldurchmesser der Flüssigkeitströpfchen des Flüssigkeitsgemischs im Sprühprozess zwischen 20 und 700 µm beträgt;
einen Vernebelungsprozess des Vernebelns von mindestens der ersten Flüssigkeit dadurch, dass das Flüssigkeitsgemisch, welches in den Behälter (12) gesprüht wird, in die Lage versetzt wird, in Kontakt mit dem erhitzten Gas zu gehen;
einen Ablassprozess des Ablassens, durch eine Ablassöffnung (12A) des Behälters (12), von mindestens einem Gasgemisch, welches die erste im Vernebelungsprozess vernebelte Flüssigkeit enthält; und
einen Trennprozess des Trennens der zweiten Flüssigkeit vom Gasgemisch,
wobei die Temperatur des erhitzten Gases in dem Zufuhrmittel von erhitztem Gas (14, 15) höher ist als der Siedepunkt der ersten Flüssigkeit, jedoch niedriger als der Zersetzungspunkt der zweiten Flüssigkeit.

2. Verfahren zum Trennen eines Flüssigkeitsgemischs nach Anspruch 1, bei welchem der Trennprozess einen Flüssigkeits-Gas-Trennprozess des Trennens der zweiten Flüssigkeit vom Gasgemisch enthält, indem das Gasgemisch, welches aus dem Behälter (12) abgelassen wird, in die Lage versetzt wird, mit einem Kühlmittel in Kontakt zu gehen.

3. Verfahren zum Trennen eines Flüssigkeitsgemischs nach Anspruch 1 oder 2, bei welchem die erste Flüssigkeit entweder ein anorganisches Lösemittel oder ein organisches Lösemittel ist.

4. Verfahren zum Trennen eines Flüssigkeitsgemischs nach Anspruch 1 oder 2, bei welchem die erste Flüssigkeit Wasser ist.

## Revendications

1. Procédé destiné à séparer un liquide mélangé, dans lequel un liquide est séparé d'un liquide mélangé contenant au moins un premier liquide et un deuxième liquide, dans lequel le deuxième liquide est un liquide ionique, étant un composé organique qui est une substance chimique constituée par un sel et qui est à l'état liquide à 1 atmosphère et à 25°C, **caractérisé en ce que** le deuxième liquide a un point de décomposition qui est plus élevé qu'un point d'ébullition du premier liquide, le procédé comprenant :
un processus de vaporisation consistant à vaporiser le liquide mélangé à partir d'un moyen de vaporisation (8) destiné à vaporiser le liquide mélangé, dans un récipient (12) dans lequel un gaz chauffé, ayant une température plus élevée que le point d'ébullition du premier liquide, est fourni à partir d'un moyen de fourniture de gaz chauffé (14, 15), le récipient (12) ayant un orifice d'évacuation (12A) destiné à évacuer au moins un gaz, dans lequel le diamètre des particules des gouttelettes de liquide du liquide mélangé dans le processus de vaporisation est de 20 à 700 µm ;
un processus de vaporisation consistant à vaporiser au moins le premier liquide en permettant au liquide mélangé vaporisé dans le récipient (12) et d'entrer en contact avec le gaz chauffé ;
un processus d'évacuation consistant à évacuer, à travers l'orifice d'évacuation (12A) du récipient (12), au moins un gaz mixte qui contient le premier liquide vaporisé dans le processus de vaporisation ; et
un processus de séparation consistant à séparer le deuxième liquide du gaz mélangé,
dans lequel la température du gaz chauffé dans le moyen de fourniture de gaz chauffé (14, 15) est plus élevée que le point d'ébullition du premier liquide mais plus basse que le point de décomposition du deuxième liquide.

2. Procédé destiné à séparer un liquide mélangé selon la revendication 1, dans lequel le processus de séparation comprend un processus de séparation liquide-gaz consistant à séparer le deuxième liquide du gaz mélangé en permettant au gaz mélangé évacué du récipient (12) d'entrer en contact avec un moyen de refroidissement.

3. Procédé destiné à séparer un liquide mélangé selon la revendication 1 ou 2, dans lequel le premier liquide est soit un solvant inorganique soit un solvant organique.

4. Procédé destiné à séparer un liquide mixte selon la revendication 1 ou 2, dans lequel le premier liquide est l'eau.
